# EUROPÄISCHE PATENTSCHRIFT

(11) **EP 0 528 316 B1**
(45) Veröffentlichungstag und Bekanntmachung des Hinweises auf die Patenterteilung: **06.03.1996**
(21) Anmeldenummer: 92113580.2
(22) Anmeldetag: 10.08.1992
(51) Int. Cl.: B29C 45/27

(54) **Spritzgiessvorrichtung mit Heisskanaldüse**
Injection moulding device with hot runner nozzle
Dispositif de moulage par injection avec buse à canal chaud

(30) Priorität: 16.08.1991 DE 4127035
(43) Veröffentlichungstag der Anmeldung: 24.02.1993
(73) Patentinhaber: Dipl.-Ing. Herbert Günther Gesellschaft mbH, A-2380 Perchtoldsdorf (AT)
(72) Erfinder: Günther, Herbert, Dipl.-Ing., W-3559 Allendorf/Eder (DE)
(74) Vertreter: Olbricht, Karl Heinrich, Dipl.-Phys.

(56) Entgegenhaltungen:
- EP-A- 0 186 413
- WO-A-91/13742
- DE-U- 9 003 574
- PLASTVERARBEITER Bd. 37, Nr. 4, April 1986, SPEYER/RHEIN DE Seiten 124 - 127 LHL, GROSSMANN 'Stirnseitiger Mehrfachanschnitt als Problemlösung'

## Beschreibung

Die Erfindung betrifft eine Spritzgießvorrichtung gemäß dem Oberbegriff von Anspruch 1.

Um eine Kunststoffschmelze von einer Spritzgießmaschine bis zum Anspritzpunkt im Werkzeug zu leiten, muß die thermoplastische Masse im Strömungskanalsystem flüssig bzw. fließfähig gehalten werden; sie wird z.B. durch eine Heißkanaldüse in die Form gespritzt und muß anschließend darin erstarren können. Das hierdurch bedingte Temperaturgefalle verlangt eine geschickte Verfahrensführung, um den notwendigen Energieaufwand zu minimieren.

Es gibt bereits Heißkanaldüsen, die am unteren Ende mit mehreren Düsenspitzen versehen sind, um entweder einen Artikel von verschiedenen Stellen her anzuspritzen oder mehrere Artikel gleichzeitig herzustellen. Je zwei bis vier Spitzen werden herkömmlich parallel oder unter 45° zur Achse eines die Heißkanaldüse durchsetzenden Materialrohrs in ein Fußstück eingesetzt.

In DE-U-9 003 574 ist eine Heißkanaldüse beschrieben, die in ein aktives und ein passives Bauelement unterteilt ist, nämlich in einen inneren Düsenkörper mit Ansatz und in eine äußere Halterung mit radialen Leitspitzen, die nur zur seitlichen Abstützung und Ringspalt-Bildung am Angußpunkt dienen. In der Preis hat sich gezeigt, daß bei einer solchen Konstruktion ein Eindringen vom Kunststoff in den Fügespalt allgemein nicht vermeidbar ist. An der Verbindungsstelle tritt eine unkontrollierte Wärmeisolierung auf, die den Wärmetransport von dem aktiven Düsenkörper zum Angußbereich behindert, und zwar trotz wärmeleitender Ausbildung der passiven Leitspitzen. Überdies sind selbst bei verschiebbar angeordneten Düsenspitzen herkömmlich nur Anwendungen möglich, die in bezug auf den Teilkreisdurchmesser nach unten hin begrenzt um die Montage noch ausführen zu können.

Die bisherigen Vorrichtungen sind in thermischer Hinsicht allgemein verbesserungsbedürftig. Es ist ein wichtiges Ziel der Erfindung, unter Überwindung der Nachteile des Standes der Technik eine Spritzgießvorrichtung der eingangs genannten Art so weiterzubilden, daß nicht nur möglichst einfacher Aufbau und damit wirtschaftliche Fertigung sowie Montage gewährleistet sind, sondern auch einwandfreie Artikel in besonders kostengünstigem Betrieb erzeugt werden können.

Dieses Ziel wird mit der Spritzgießvorrichtung nach Anspruch 1 erreicht. Ausgestaltungen dieser Vorrichtung sind Gegenstand der Ansprüche 2 bis 14.

Bei einer Spritzgießvorrichtung mit einem Gehäuse, das eine Heißkanaldüse aufnimmt und eine Formnestpaltte sowie einen Formeneinsatz mit seitlicher Wandung aufweist, wobei an einen Anschlußkopf mit einer Material-Zuführöffnung und einem breiteren Flanschkörper axial ein schmalerer Schaft anschließt, der im Gehäuse gehaltert ist,in den Formeinsatz ragt und wenigstens eine Düsenspitze hat, deren Mittellinie zur Aches eines Flanschkörper und Schaft durchsetzenden, außenbeheizten Materialsrohrs nach außen geneigt ist, und wobei das freie Ende der bzw. jeder Düsenspitze über den Schaft hinaus frei durch die Wandung des Formeneinsatzes hindurch bis an den herzustellenden Artikel reicht, sieht die Erfindung vor, daß die bzw. jede Düsenspitze innerhalb eines geteilten Formeneinsatzes sitzt, dessen Teile zur Achse verstellbar und in seiner Endlage im Gehäuse bzw. Werkzeug fixierbar sind. Beispielsweise können Formeneinsatz-Hälften vor der Montage auseinandergezogen und nach dem Einbringen der höhenpositionierten Düsenspitzen zusammengeschoben und fixiert werden. Infolgedessen kann die Heißkanaldüse selbst ein insgesamt relativ kleines Bauelement bilden. Diese Konstruktion ermöglicht außerdem das besonders günstige seitliche Anspritzen, wobei die beim Spritzdruck auftretenden Rückstoßkräfte nur mit der sehr kleinen Auslauffläche der Düsenspitze wirksam werden.

In speziellerer Gestaltung gemäß Anspruch 2, wofür selbständiger Schutz beansprucht wird, weist der Formeneinsatz wenigstens einen Hinterschnitt auf, in den die Düsenspitze durch eine Zwei-Schritt-Relativbewegung in zueinander im Winkel stehenden Richtungen einbringbar ist. Um den Hinterschnitt zu überwinden, ist zwischen der Düse und dem Formeneinsatz eine wenigstens zweidimensionale Relativbewegung notwendig. Das bedeutet, daß auch radial überstehende Düsenspitzen in einer Bohrung des Formeneinsatzes bequem und exakt montiert werden können, wozu es günstig ist, wenn gemäß Anspruch 3 die beiden Bewegungsschritte zumindest im wesentlichen rechtwinkelig zueinander verlaufen, z.B. nach Anspruch 4 zunächst etwa achsparallel und sodann in spitzem oder rechtem Winkel dazu, d. h. im wesentlichen quer zur Achse der Düse.

Anspruch 5 sieht vor, daß die bzw. jede Düsenspitze an dem Schaft-Endteil form- und/oder stoffschlüssig so befestigt ist, daß sie das Gehäuse nicht berührt, insbesondere indem nach Anspruch 6 der Schaft zumindest im Bereich seines Endteils bzw. Fußes einen radialen Abstand zum Gehäuse hat. Dadurch ist in einfacher Weise eine thermische Trennung gewährleistet, so daß von der heißen Düsenspitze eine geringstmögliche Wärmemenge direkt an das Gehäuse übergeht. Außerdem trägt die Konstruktion erheblich zu hoher Standfestigkeit trotz der beträchtlichen Spritzdrücke bei, die üblicherweise bei 1.000 bar oder darüber liegen.

In diesem Zusammenhang ist es vorteilhaft, wenn der Schaft-Endteil laut Anspruch 7 die Düsenspitzen haltert und zugleich zentriert, z. B. mittels einer Außendurchmesser-Stufe am Schaft. Dieser ist gemäß Anspruch 8 hinsichtlich seiner Wärmeeigenschaften mehrstufig ausgebildet; in dem aus hochfestem Material wie Werkzeugstahl bestehenden Schaft-Endteil sitzt die Düsenspitze wärmeleitend, und ein anschließender thermischer Trennkörper ist von einem hochfesten, wärmeleitenden Bauelement fortgesetzt. Man erkennt, daß die Verwendung des jeweils mit wärmeleitenden Bauteilen verbundenen Trennkörpers den Wärmeübergang dazwischen weitestgehend abblockt, so daß die Düsenspitzen heiß bleiben und nur geringe Wärmemengen an das Gehäuse abfließen können.

Ein mechanisch besonders stabiler Aufbau besteht gemäß Anspruch 9 darin, daß der Schaft ein Hüllrohr, eine damit verschweißte Trennhülse und einen insbesondere ringförmigen Fuß aufweist, an dem die bzw. jede Düsenspitze befestigbar ist. Dabei kann die Trennhülse des Schafts nach Anspruch 10 in bezug auf sein Hüllrohr einspringen, so daß eine umlaufende Außendurchmesser-Stufe gebildet ist, die auch mit schrägem oder gewölbtem Übergang zur Trennhülse verlaufen kann.

Eine weitere Maßnahme besteht nach Anspruch 11 darin, daß das Wärmeleitelement eine metallische Buchse ist, deren unterer Teil an das untere Ende des Materialrohrs sowie der Heizeinrichtung formschlüssig anschließt und seinerseits vom Fußring formschlüssig übergriffen wird. Dadurch ist eine hochfeste Konstruktion geschaffen, die allen mechanischen und thermischen Beanspruchungen standhält.

Vorzugsweise ist das Wärmeleitelement laut Anspruch 12 in seinem oberen Bereich von dem thermischen Trennkörper und von der Heizeinrichtung wärmeisoliert, insbesondere durch Luftspalte derart, daß vom unteren Ende des Wärmeleitelements ausgehend wenigstens ein sich nach oben erweiternder Konusspalt vorhanden ist. Um den Wärmeübergang auf das Hüllrohr des Schafts weiter herabzusetzen, kann nach Anspruch 13 zwischen dem oberen Ende des Wärmeleitelements und dem thermischen Trennkörper ein höchstens mäßig wärmeleitender Abstützungring angeordnet sein, der vorzugsweise zwischen Stirnflächen des Wärmeleitelements und der Trennhülse sitzt und aus einem Material niedriger Wärmeleitfähigkeit wie Keramik, Titan, Chrom-Nickel-Stahl o. dgl. besteht.

Vorteilhaft ist die Ausgestaltung von Anspruch 14, wonach zumindest eine weitere Düsenspitze in einem Winkel zwischen 0° und 90° zur Achse des Materialrohrs an dem Schaft-Endteil befestigbar ist. Dies vergrößert die Möglichkeiten der Mehrfach-Anspritzung in sehr praktischer Weise. Auch hierbei können die Düsenspitzen in genauer Position so in die Formeneinsatz-Teile geschoben werden, daß im Betrieb ein Maximum an Wärme bis an die Oberfläche des zu spritzenden Artikels herangeführt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: ein Einbaubeispiel einer Heißkanaldüse, teilweise im Schnitt,
- Fig. 2a: ein anderes Einbaubeispiel ähnlich Fig. 1,
- Fig. 2b: eine Druntersicht, teilweise im Schnitt, entsprechend dem Düsen-Einbaubeispiel von Fig. 2a,
- Fig. 3: einen Längsschnitt durch eine Heißkanaldüse und
- Fig. 4: eine schematisierte Schnittansicht einer anderen Düsen-Ausführungsform.

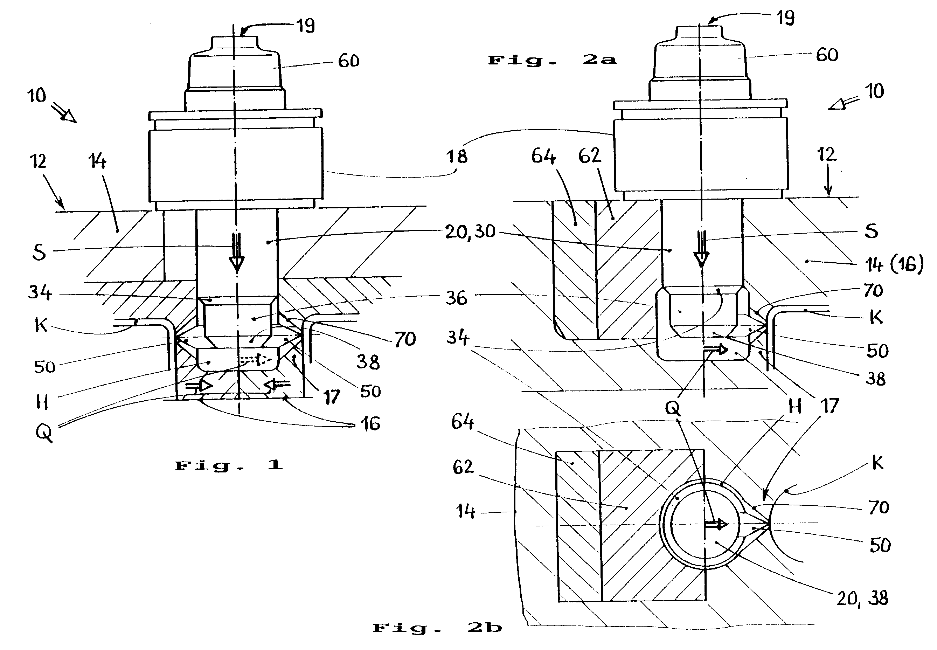

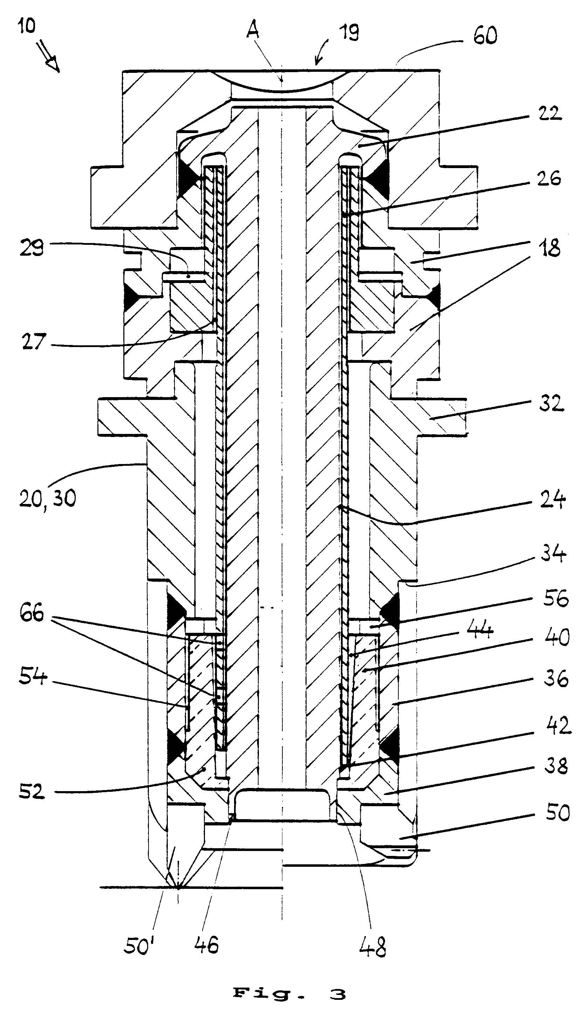

Wie aus Fig. 1, 2a, 2b zu ersehen ist, wird eine allgemein mit 10 bezeichnete Heißkanaldüse zur praktischen Verwendung in ein Gehäuse bzw. Werkzeug 12 eingesetzt, das eine Formnestplatte 14 sowie einen - eventuell geteilten - Formeneinsatz 16 aufweist.

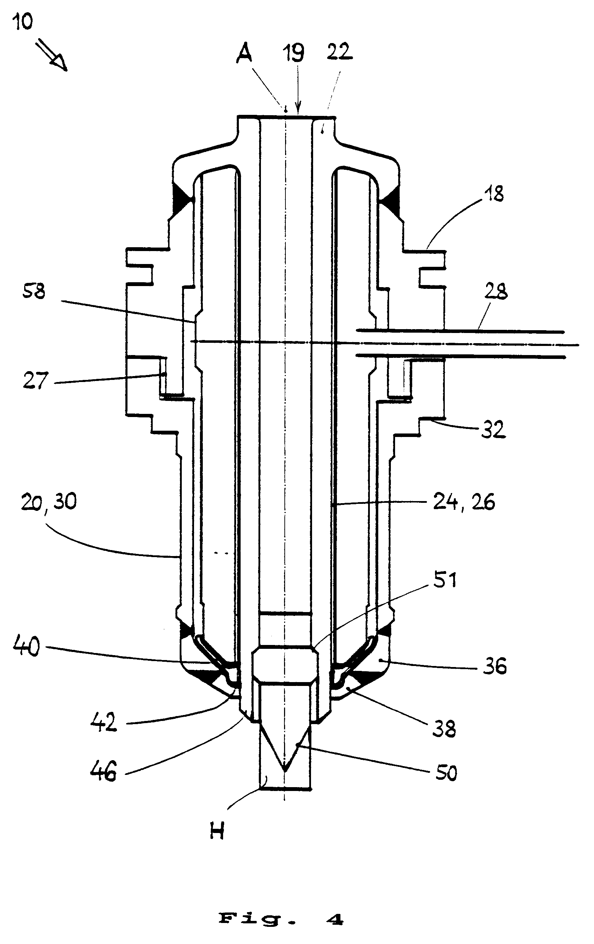

Die Heißkanaldüse 10 hat einen breiteren Flanschkörper 18, an den ein schlanker Schaft 20 anschließt. Ein außenbeheiztes Materialrohr 22 durchsetzt den Flanschkörper 18 sowie den Schaft 20 konzentrisch. Eine dünne elektrische Isolierung 24 trennt das Materialrohr 22 von einer Heizeinrichtung, die als teilweise geschlitztes Heizrohr 26 ausgebildet sein kann (Fig. 3). Weitere Isolierungen 27, 29 an einem Elektroden-Anschluß 28 gewährleisten die Stromeinspeisung über einen seitlich herangeführten Elektrodenanschluß 28 (Fig. 4).

Der Schaft 20 ist vorzugsweise thermisch mehrstufig ausgebildet. Er hat ein äußeres Hüllrohr 30 mit einem oberen Bund 32 zur Anlage an der Formnestplatte 14 und mit einer unteren Stufe 34, die als einspringender Absatz zu einem Endabschnitt von kleinerem Durchmesser führt. Im Beispiel der Fig. 3 ist die Stufe 34 rechtwinkelig abgesetzt, während Fig. 4 und Fig. 2a Hüllrohre mit schräger Stufe 34 erkennen lassen.

Das Hüllrohr 30 besteht aus hochfestem, gut wärmeleitendem Material, z.B. Werkzeugstahl. Am unteren Ende ist das Hüllrohr 30 mit einer Trennhülse 36 verschweißt, die vorzugsweise aus einem Material mit sehr niedriger Wärmeleitfähigkeit besteht, etwa aus Titan oder Chrom-Nickel-Stahl. Daran schließt unten ein ringförmiger Fuß oder Endteil 38 an, der wiederum aus hochfestem, wärmeleitendem Werkstoff gefertigt ist.

In die unteren Schaftteile 36, 38 ist eine Wärmeleitbuchse 40 eingesetzt, die an ihrem unteren Ende 52 durch eine Schweißstelle 42 mit dem unteren Ende von Materialrohr 22 und Heizrohr 26 verbunden ist. Innen trennt ein Konusspalt 44 die Wärmeleitbuchse 40 von dem unteren Bereich des Heizrohrs 26, das dort mit Schlitzen 66 versehen ist, um den Stromwiderstand zu erhöhen und auf diese Weise die Heizleistung am unteren Ende des Materialrohrs 22 zu steigern. Ein äußerer Ringspalt 54 isoliert die Wärmeleitbuchse 40 vom Hauptteil der Trennhülse 36. Zwischen den einander benachbarten Stirnflächen der Wärmeleitbuchse 40 und des Hüllrohrs 30 sitzt ein Stützring 56, der eine mechanische Abstützung bewirkt, dank schlechter Wärmeleitung aber den Energieübergang von der Wärmeleitbuchse 40 zum Hüllrohr 30 weitestgehend einschränkt. Bevorzugt besteht der Ring 56 aus einem Material geringer Wärmeleitfähigkeit, z.B. aus Titan, Chrom-Nickel-Stahl, Keramik o.dgl.

Am Fuß 38, der bevorzugt aus Werkzeugstahl besteht, sind Düsenspitzen 50, 50' wärmeleitend befestigt, z.B. durch Lötung. Die Düsenspitzen 50 (Fig. 1, 2a, 2b; Fig. 3 rechts) stehen im wesentlichen rechtwinkelig zur Achse A des Materialrohrs 22, welches die ganze Heißkanaldüse 10 durchsetzt und oben von einer Aufnahme bzw. Kappe 60 übergriffen ist. Die Düsenspitze 50' (links in Fig. 3) ist senkrecht ausgerichtet, d.h. parallel zur Längsachse A.

Im Ausführungsbeispiel der Fig. 4 sind bei allgemein ähnlichem Aufbau gleichartige Elemente mit denselben Bezugszahlen gekennzeichnet wie in Fig. 3. Auch hier kann eine (in Fig. 4 weggelassene) Kappe 60 auf das Materialrohr 22 aufgesetzt werden, an dessen unterem Ende eine Düsenspitze 50 in Richtung der Achse A angeordnet ist. Sie reicht in einen Hohlraum H des (ebenfalls hier nicht gezeichneten) Formeneinsatzes 16.

Etwa in Höhe der Schweißstelle 42 hat die Düsenspitze 50 eine äußere Erweiterung 51, die formschlüssig in das untere Ende des Materialrohrs 22 eingepaßt ist. Mit diesem können Dichtlippen 46 einstückig sein, die den Körper der Düsenspitze 50 im oberen Haltebereich umschließen. Im unteren Hauptbereich hat die Düsenspitze 50 jedoch keine Berührung mit den das Materialrohr 22 fortsetzenden Dichtlippen 46. Letztere durchsetzen außerdem das untere Ende der Wärmeleitbuchse 40 sowie den Schaftfuß 38 konzentrisch, so daß Ausgleichs-Gleitbewegungen zwischen den sich berührenden Elementteilen 38, 40 (bzw. 42) und 46 unbehindert möglich sind, die infolge thermischer Dehnung und Schrumpfung bei Änderungen des Wärmegleichgewichts auch unter dem hohen Spritzdruck von z.B. 300 bar bis 2.000 bar stattfinden können, der die Dichtlippen 46 fest auf den Stützkragen 48 preßt.

Zum (hier gleichfalls nicht dargestellten) Gehäuse 12 hin ist wiederum die thermische Unterbrechung durch die Trennhülse 36 zwischen den wärmeleitenden Schaftteilen vorgesehen, d.h. zwischen dem Fußring 38 und dem Hüllrohr 30. Durch diese ebenso einfache wie wirksame Isoliermaßnahme ist im Betrieb eine günstige Leistungsbilanz gewährleistet.

Einbaubeispiele gehen aus den Fig. 1, 2a, 2b hervor. Man erkennt, daß der Schaft 20 mit dem Hüllrohr 30 in die Formnestplatte 14 des Gehäuses 12 eingepaßt ist. Das Hüllrohr 30 ragt im Beispiel der Fig. 1 noch mit dem vollen Außendurchmesser in den Formeneinsatz 16, springt dann aber mit der Stufe 34 so ein, daß die schmalere Trennhülse 36 im Inneren eines Hohlraums H freiliegt. Die Stufe 34 bzw. der Fuß 38 zentriert den Schaft 20 und damit die Heißkanaldüse 10, so daß der zu fertigende Kunststoff-Artikel K exakt die benötigte Gestalt bzw. Wandstärke erhält. Mit mehreren Spitzen 50 ist es möglich, entweder einen Artikel K an verschiedenen Stellen anzuspritzen oder das gleichzeitige Anspritzen mehrerer, voneinander getrennter Artikel zu bewirken. Im Beispiel der Fig. 2a, 2b ist nur eine Düsenspitze 50 vorgesehen, und der Schaft 20 ist mit seinem Hüllrohr 30 durch ein Füllstück bzw. einen Rahmen 62 positioniert, der seinerseits mit einem Keil 64 in der Platte 14 festgelegt ist. Nicht dargestellt sind Einbaubeispiele, bei denen die bzw. jede Düsenspitze 50 in einem Winkel zur Achse A steht, der durch entsprechende Gestaltung der Aufnahmen im Fuß 38 beliebig im Bereich zwischen 0° und 90° oder auch darüber liegen kann.

Die Heizvorrichtung kann mit Nieder- oder mit Netzspannung betrieben werden. Im letzteren Falle erfolgt die Stromrückführung (hier nicht dargestellt) innerhalb der Heizeinrichtung, während sie im Niederspannungsbetrieb direkt über das Materialrohr 22 und den Flanschkörper 18 an das Werkzeug (Gehäuse 12) erfolgt.

Bei den Ausführungsformen gemäß Fig. 1, 2a, 2b, 3 ergibt sich ein weiterer wärmetechnischer Vorteil. Das Materialrohr 22 erfährt durch das Aufheizen auf Verarbeitungstemperatur eine Längsdehnung. Der Schaft 20 mit seinen Teilen 30, 36, 38 behält hingegen dank guter Wärmetrennung eine wesentlich niedrigere Temperatur. Mithin wird eine Längenänderung der Spitzen 50, 50' durch das Aufheizen weitgehend vermieden. Dies ist namentlich in Fällen kleiner Angußpunkt-Durchmesser wichtig, weil dann die genaue Lage der betreffenden Düsenspitze(n) am Angußpunkt im Werkzeug 12 herstellbar ist, ohne daß die Düsenlänge besonders angepaßt werden müßte.

Beim seitlichen Anspritzen durch eine werkzeugseitig vorhandene Wand wird herkömmlich auch ein Anteil kalten Materials in den zu fertigenden Kunststoff-Artikel K mit hineingetragen, was zu Fehlstellen im Produkt führt. Um dem zu begegnen, wird die Wärme erfindungsgemäß bis an die Oberfläche des zu entformenden Artikels K geleitet. Die beschriebene Düse 10 (oder eine andere Heißkanaldüse) wird mit ihren Düsenspitzen 50, 50' jeweils auf die passende Höhenposition im Werkzeug 12 eingestellt und darin durch Verkeilung der zweckmäßig geteilten, einzeln beweglichen Formeneinsatz-Hälften festgelegt. Die Düsenspitzen 50, 50' berühren das Werkzeug 12 bzw. die Wandung 17 an keiner Stelle. Allenfalls über den mit thermoplastischer Masse gefüllten Hohlraum H fließt Wärme unkontrolliert an das Werkzeug ab, was jedoch durch Isoliermaßnahmen stark gebremst wird, nämlich durch die Spalte 44, 54, den schlecht leitenden Stützring 56 und die Trennhülse 36. Das ausströmende Material wird nicht - wie zum Teil üblich - durch Bohrungen, Kanäle o.dgl. in den Schaft-Endbereich geleitet.

Die Erfindung ist nicht auf die dargestellten Ausführungsbeispiele beschränkt. Man erkennt aber, daß bei einer Heißkanaldüse 10, deren im Gehäuse 12 gehalterter Schaft 20 in einen Formeneinsatz 16 ragt und wenigstens eine Düsenspitze 50, 50' trägt, diese über den Schaft hinaus bis an den herzustellenden Artikel K reicht. Der Formeneinsatz 16 weist einen Hinterschnitt 70 auf, in den die Düsenspitze 50, 50' durch eine Zwei-Schritt-Bewegung einbringbar ist, z.B. zunächst etwa parallel und dann quer zur Achse A eines außenbeheizten Materialrohrs 22. Jede Düsenspitze 50, 50' ist an dem Schaft-Endteil 38 form- und/oder stoffschlüssig so befestigt, daß sie das Gehäuse 12 bzw. eine Formeneinsatz-Wandung 17 nicht berührt. Eine umlaufende Außendurchmesser-Stufe 34 zentriert den thermisch mehrstufigen Schaft 20, dessen hochfester Fuß 38 die Düsenspitze(n) wärmeleitend haltert; an eine Trennhülse 36 schließt zum Gehäuse hin ein wärmeleitendes Hüllrohr 30 mit einer Außendurchmesser-Stufe 34 an. Eine innere Wärmeleitbuchse 40 ist von der Trennhülse 36 durch Luftspalte 54, 44 und einen Stützring 56 wärmeisoliert.

### Bezugszeichen-Liste

- A: (Längs-) Achse
- H: Hohlraum
- K: Kunststoff-Artikel
- Q: Richtung
- S: Richtung
- 10: Heißkanaldüse
- 12: Gehäuse
- 14: Formnestplatte
- 16: Formeneinsatz
- 17: Wandung
- 18: Flanschkörper
- 19: Material-Zuführöffnung
- 20: Schaft
- 22: Materialrohr
- 24: Isolierung
- 26: Heizrohr
- 27: Isolierung
- 28: Elektrodenanschluß
- 29: Isolierscheibe
- 30: Hüllrohr
- 32: Bund
- 34: Stufe/Absatz
- 36: Trennhülse
- 38: Fuß(ring)/Endteil
- 40: Wärmeleitbuchse
- 42: Schweißstelle
- 44: Konusspalt
- 46: Dichtlippen
- 48: Stützkragen
- 50, 50': Düsenspitze
- 51: Erweiterung
- 52: unterer Teil
- 54: Ringspalt
- 56: Abstützung/Stützring
- 58: Stromeinspeisering
- 60: Aufnahme/Kappe
- 62: Rahmen/Füllstück
- 64: Keil
- 66: Schlitze
- 70: Hinterschnitt

## Patentansprüche

1. Spritzgießvorrichtung mit einem Gehäuse (12), das eine Heißkanaldüse (10) aufnimmt und eine Formnestplatte (14) sowie einen Formeneinsatz (16) mit seitlicher Wandung (17) aufweist, wobei die Heißkanaldüse einen Anschlußkopf (60) mit einer Material-Zuführöffnung (19) und einen breiteren Flanschkörper (18) aufweist, an den axial ein schmalerer Schaft (20) anschließt, der im Gehäuse (12) gehaltert ist, in den Formeinsatz (16) ragt und wenigstens eine Düsenspitze (50, 50') hat, deren Mittellinie zur Achse (A) eines Flanschkörper (18) und Schaft (20) durchsetzenden, außenbeheizten Materialrohrs (22) nach außen geneigt ist, und wobei das freie Ende der bzw. jeder Düsenspitze (50, 50') über den Schaft (20) hinaus frei durch die Wandung (17) des Formeneinsatzes (16) hindurch bis an den herzustellenden Artikel (K) reicht,dadurch **gekennzeichnet**, daß die bzw. jede Düsenspitze (50, 50') innerhalb eines geteilten Formeneinsatzes (16) sitzt, dessen Teile quer zur Achse (A) verstellbar und in seiner Endlage im Gehäuse (12) fixierbar sind.

2. Vorrichtung nach Anspruch 1, dadurch **gekennzeichnet**, daß der Formeneinsatz (16) wenigstens einen Hinterschnitt (70) aufweist, in den die bzw. jede Düsenspitze (50, 50') durch eine Zwei-Schritt Relativbewegung in zueinander im Winkel stehenden Richtungen (S, Q) einbringbar ist.

3. Vorrichtung nach Anspruch 2, dadurch **gekennzeichnet**, daß die beiden Bewegungsschritte zumindest im wesentlichen rechtwinkelig zueinander verlaufen.

4. Vorrichtung nach Anspruch 2 oder 3, dadurch **gekennzeichnet**, daß ein erster Bewegungsschritt zumindest im wesentlichen parallel zur Achse (A) der Düse (10) bzw. des Materialrohrs (22) verläuft und daß ein zweiter Bewegungsschritt in spitzem oder rechtem Winkel zu der Richtung des ersten Bewegungsschrittes erfolgt, d.h. im wesentlichen quer zur Achse (A) der Düse (10).

5. Vorrichtung nach einem der Ansprüche 1 bis 4, dadurch **gekennzeichnet**, daß die bzw. jede Düsenspitze (50, 50') an dem Schaft-Endteil (38) form- und/oder stoffschlüssig so befestigt ist, daß sie das Gehäuse bzw. Werkzeug (12) nicht berührt.

6. Vorrichtung nach einem der Ansprüche 1 bis 5, dadurch **gekennzeichnet**, daß der Schaft (20) zumindest im Bereich seines Endteils bzw. Fußes (38) einen radialen Abstand zum Gehäuse bzw. Werkzeug (12) hat.

7. Vorrichtung nach einem der Ansprüche 1 bis 6, dadurch **gekennzeichnet**, daß der Schaft-Endteil (38) die Düsenspitzen (50, 50') haltert und zugleich zentriert, z.B. mittels einer Außendurchmesser-Stufe (34) am Schaft (20).

8. Vorrichtung nach einem der Ansprüche 1 bis 7, dadurch **gekennzeichnet**, daß in den aus hochfestem Material wie Werkzeugstahl bestehenden Schaft-Endteil (38) die bzw. jede Düsenspitze (50, 50') wärmeleitend einsetzbar ist und daß er von einem thermischen Trennkörper (36) fortgesetzt ist, an welchen wiederum ein hochfestes, gut wärmeleitendes Bauelement (40) anschließt.

9. Vorrichtung nach einem der Ansprüche 1 bis 8, dadurch **gekennzeichnet**, daß der Schaft (20) ein Hüllrohr (30), eine damit verschweißte Trennhülse (36) und einen insbesondere ringförmigen Fuß (38) aufweist, an dem die bzw. jede Düsenspitze (50, 50') befestigbar ist.

10. Vorrichtung nach Anspruch 9, dadurch **gekennzeichnet**, daß die Trennhülse (36) des Schafts (20) in bezug auf sein Hüllrohr (30) einspringt, so daß eine umlaufende Außendurchmesser-Stufe (34) gebildet ist.

11. Vorrichtung nach Anspruch 8 und Anspruch 9 oder 10, dadurch **gekennzeichnet**, daß das Wärmeleitelement (40) eine metallische Buchse ist, deren unterer Teil (52) an das untere Ende des Materialrohrs (22) sowie der Heizeinrichtung (26) formschlüssig anschließt und seinerseits vom Fußring (38) formschlüssig übergriffen wird.

12. Vorrichtung nach einem der Ansprüche 8 bis 11, dadurch **gekennzeichnet**, daß das Wärmeleitelement (40) in seinem oberen Bereich von dem thermischen Trennkörper (36) und von der Heizeinrichtung (26) wärmeisoliert ist, insbesondere durch Luftspalte (54, 44) derart, daß vom unteren Ende (52) des Wärmeleitelements (40) ausgehend wenigstens ein sich nach oben erweiternder Konusspalt (44) vorhanden ist.

13. Vorrichtung nach einem der Ansprüche 8 bis 12, dadurch **gekennzeichnet**, daß zwischen dem oberen Ende des Wärmeleitelements (40) und dem thermischen Trennkörper (36) zumindest ein höchstens mäßig wärmeleitender Abstütz-Ring (56) angeordnet ist.

14. Vorrichtung nach einem der Ansprüche 1 bis 13, dadurch **gekennzeichnet**, daß zumindest eine weitere Düsenspitze (50'') in einem Winkel zwischen 0° und 90° zur Achse (A) des Materialrohrs (22) an dem Schaft-Endteil (38) befestigbar ist.

## Claims

1. Injection moulding device having a casing (12) that receives a hot runner nozzle (10) and comprises a mould cavity plate (14) as well as a mould insert (16) with a lateral wall (17), the hot runner nozzle comprising a top portion (60) with a flow opening (19) and a broad flanged body (18) axially continued by a slender shaft (20) which is retained in the casing (12), extends into the mould insert (16) and includes at least one nozzle tip (50, 50') whose center line is outwardly inclined relative to the axis (A) of a flow tube (22) that is heatable from its outside and extends through the flanged body (18) and the shaft (20), the free ends of the nozzle tips (50, 50') extending beyond the shaft (20) free of contact through the wall (17) of the mould insert (16) up to an article (K) to be moulded, wherein the or each nozzle tip (50, 50') is seated between halves of a divided mould insert (16) whose halves are adapted to be displaced in a direction transverse to the axis (A) and to be fixed in its end position within the casing (12).

2. Device according to claim 1, wherein the mould insert (16) comprises at least one undercut (70) for receiving the nozzle tips (50, 50') which are adapted to be mounted by a two-step movement in directions (S, Q) that are at an angle to each other.

3. Device according to claim 2 wherein the two-step movements are substantially perpendicular to each other.

4. Device according to claim 2 or claim 3, wherein a first movement step is substantially parallel to the axis (A) of the nozzle (10) and/or the flow tube (22) and wherein a second movement step is at an acute angle or perpendicular to the first movement step, i.e. substantially transverse to the axis (A) of nozzle (10).

5. Device according to any one of claims 1 to 4, wherein the or each nozzle tip (50, 50') is form-fitted or materially joined to the shaft foot portion (38) free of contact to the tool or casing (12).

6. Device according to any one of claims 1 to 5, wherein at least the foot portion (38) of the shaft (20) is radially spaced from the casing or tool (12).

7. Device according to any one of claims 1 to 6, wherein the nozzle tips (50, 50') are retained and also centered by the shaft foot portion (38), e.g. by means of an outer step or shoulder (34) at shaft (20).

8. Device according to any one of claims 1 to 7, wherein the shaft (20) includes a high-strength foot portion (38) into which the or each nozzle tip (50, 50') is heat-conductively insertable and which is continued by a thermally separating body (36) that, in turn, is joined by a high-strength component (40) of large heat conductivity.

9. Device according to any one of claims 1 to 8, wherein the shaft (20) includes an envelope tube (30), a separating sleeve (36) welded thereto and an especially ring-shaped foot portion (38) to which the or each nozzle tip (50, 50') is attachable.

10. Device according to claim 9, wherein the separating sleeve (36) of the shaft (20) recedes relative to its envelope tube (30) so as to form a peripheral step or shoulder (34) at the outer diameter.

11. Device according to claim 8 and claim 9 or 10, wherein the heat-conducting component (40) is a metallic bush whose lower portion (52) is form-fitted to the lower ends of the flow tube (22) and of the heating means (26) and is, in turn, form-fitted within the ring-shaped shaft foot portion (38).

12. Device according to any one of claims 8 to 11, wherein thermal insulation means, in particular air gaps (54, 44), are provided between the upper portion of the heat-conducting component (40) and the thermally separating body (36) as well as the heating means (26) such that at least one conical gap (54) widening upwardly issues from the lower portion (52) of the heat-conducting component (40).

13. Device according to any one of claims 8 to 12, wherein at least one supporting ring (56) of low or moderate heat conductivity is seated between the upper portion of the heat-conducting component (40) and the thermally separating body (36).

14. Device according to any one of claims 1 to 13, wherein at least one further nozzle tip (50'') is attachable to the shaft foot portion (38) at an angle between 0° and 90° relative to the axis (A) of the flow tube (22).

## Revendications

1. Dispositif de moulage par injection, avec un boîtier (12) recevant une filière de moulage à canaux chauds (10) et ayant une plaque d'empreinte du moule (14) ainsi qu'un noyau de moule (16) avec une paroi latérale (17), la filière ayant une tête de raccordement (60) avec une ouverture d'alimentation en matériau (19) et un corps à bride plus large (18), auquel se rattache axialement une tige plus étroite (20) logée dans le boîtier (12), allant jusque dans le noyau du moule (16) et ayant au moins une tête de filière (50, 50'), dont la ligne médiane est penchée vers l'extérieur par rapport à l'axe (A) d'une conduite de matériau (22) chauffée de l'extérieur et traversant le corps à bride (18) et la tige (20), et l'extrémité libre de la ou de chaque tête de filière (50, 50') allant librement au-delà de la tige (20), en traversant la paroi (17) du noyau du moule (16), jusqu'à l'article (K) devant être fabriqué, caractérisé en ce que la ou chaque tête de filière (50, 50') se trouve à l'intérieur d'un noyau de moule (16) partagé, dont les parties sont réglables par rapport à l'axe (A) et fixables dans le boîtier (12) dans la position finale.

2. Dispositif selon la revendication 1, caractérisé en ce que le noyau de moule (16) a au moins une contre-dépouille (70), dans laquelle la ou chaque tête de filière (50, 50') peut être placée moyennant un mouvement relatif à deux phases, dans des directions angulaires (S, Q) l'une par rapport à l'autre.

3. Dispositif selon la revendication 2, caractérisé en ce que les deux phases du mouvement sont au moins globalement perpendiculaires l'une à l'autre.

4. Dispositif selon la revendication 2 ou 3, caractérisé en ce qu'une première phase du mouvement est au moins globalement parallèle à l'axe (A) de la filière (10) ou de la conduite de matériau (22) et qu'une seconde phase du mouvement est en angle aigu ou droit par rapport à la direction de la première phase du mouvement, c'est-à-dire en gros transversalement à l'axe (A) de la filière (10).

5. Dispositif selon l'une des revendications 1 à 4, caractérisé en ce que la ou chaque tête de filière (50, 50') est fixée solidairement de forme et/ou de matière à l'extrémité (38) de la tige, de manière à ne pas toucher le boîtier ou l'outil (12).

6. Dispositif selon l'une des revendications 1 à 5, caractérisé en ce que la tige (20) a, au moins dans le secteur de son extrémité ou pied (38), une distance radiale par rapport au boîtier ou l'outil (12).

7. Dispositif selon l'une des revendications 1 à 6, caractérisé en ce que l'extrémité (38) de la tige loge et centre en même temps les têtes de filière (50, 50'), par exemple moyennant un étagement (34) du diamètre extérieur de la tige (20).

8. Dispositif selon l'une des revendications 1 à 7, caractérisé en ce que la ou chaque tête de filière (50, 50') peut être placée thermoconductiblement dans l'extrémité (38) de la tige faite de matériau hautement résistant tel que l'acier pour outils, et en ce que l'extrémité est prolongée par un corps de séparation thermique (36), auquel se rattache à son tour un élément de construction (40) hautement résistant et bon conducteur de la chaleur.

9. Dispositif selon l'une des revendications 1 à 8, caractérisé en ce que la tige (20) a un tube de gainage (30), une douille de séparation (36) qui y est soudée, et un pied (38) notamment de forme annulaire, sur lequel peut être fixée la ou chaque tête de filière (50, 50').

10. Dispositif selon la revendication 9, caractérisé en ce que la douille de séparation (36) de la tige (20) est en retrait par rapport à son tube de gainage (30), pour former un étagement circonférentiel (34) du diamètre extérieur.

11. Dispositif selon la revendication 8 et la revendication 9 ou 10, caractérisé en ce que l'élément thermoconducteur (40) est une douille métallique, dont la partie inférieure (52) se rattache solidairement de forme à l'extrémité inférieure de la conduite de matériau (22) et du dispositif de chauffage (26) et qui est enjambée à son tour solidairement de forme par le pied annulaire (38).

12. Dispositif selon l'une des revendications 8 à 11, caractérisé en ce que l'élément thermoconducteur (40) est isolé thermiquement dans son secteur supérieur du corps de séparation thermique (36) et du dispositif de chauffage (26), notamment par des fentes d'aération (54, 44), de manière à avoir au moins une fente conique (44) partant de l'extrémité inférieure (52) de l'élément thermoconducteur (40) et s'élargissant vers le haut.

13. Dispositif selon l'une des revendications 8 à 12, caractérisé en ce qu'entre l'extrémité supérieure de l'élément thermoconducteur (40) et le corps de séparation thermique (36), il y a au moins une bague d'appui (56) d'une thermoconductibilité tout au plus faible.

14. Dispositif selon l'une des revendications 1 à 13, caractérisé en ce qu'au moins une autre tête de filière (50'') peut être fixée sur l'extrémité (38) de la tige, en un angle situé entre 0° et 90° par rapport à l'axe (A) de la conduite de matériau (22).
